(19) Europäisches Patentamt
European Patent Office
Office européen des brevets

(11) **EP 1 978 824 B1**

(12) **EUROPEAN PATENT SPECIFICATION**

(45) Date of publication and mention
of the grant of the patent:
**13.10.2010 Bulletin 2010/41**

(21) Application number: **07702659.9**

(22) Date of filing: **05.01.2007**

(51) Int Cl.:
*A23L 1/00* (2006.01)     *A23L 1/19* (2006.01)
*A23G 9/38* (2006.01)     *A23J 3/20* (2006.01)
*A23G 9/32* (2006.01)

(86) International application number:
**PCT/EP2007/000157**

(87) International publication number:
**WO 2007/087968 (09.08.2007 Gazette 2007/32)**

(54) **AERATED COMPOSITIONS COMPRISING HYDROPHOBIN**

MIT LUFT DURCHSETZTE ZUSAMMENSETZUNGEN MIT HYDROPHOBIN

COMPOSITIONS AÉRÉES COMPRENANT DE L'HYDROPHOBINE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.01.2006 EP 06250524**

(43) Date of publication of application:
**15.10.2008 Bulletin 2008/42**

(73) Proprietors:
• **Unilever PLC
London
EC4Y 0DY (GB)**
Designated Contracting States:
**CY GB IE**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **COX, Andrew, Richard
Bedfordshire MK44 1LQ (GB)**
• **RUSSELL, Andrew, Baxter
Bedfordshire MK44 1LQ (GB)**
• **WATTS, Karen, Margaret
Bedfordshire MK44 1LQ (GB)**

(74) Representative: **Clarke, Christopher John
Unilever Patent Group
Colworth House
Sharnbrook
Bedford MK44 1LQ (GB)**

(56) References cited:
**EP-A- 0 469 656     EP-A- 1 212 947
EP-A- 1 621 084     EP-A- 1 623 631**

• **WESSELS J G H: "HYDROPHOBINS: PROTEINS
THAT CHANGE THE NATURE OF THE FUNGAL
SURFACE" ADVANCES IN MICROBIAL
PHYSIOLOGY, ACADEMIC PRESS, LONDON,
GB, vol. 38, no. 38, 1997, pages 1-45,
XP000999791 ISSN: 0065-2911 cited in the
application**
• **LINDER ET AL: "Hydrophobins: the protein-
amphiphiles of filamentous fungi" FEMS
MICROBIOLOGY REVIEWS, ELSEVIER,
AMSTERDAM, NL, vol. 29, no. 5, November 2005
(2005-11), pages 877-896, XP005107912 ISSN:
0168-6445**
• **WESSELS J G H: "Fungal hydrophobins: proteins
that function at an interface" TRENDS IN PLANT
SCIENCE, ELSEVIER SCIENCE, OXFORD, GB,
vol. 1, no. 1, January 1996 (1996-01), pages 9-15,
XP004792951 ISSN: 1360-1385**

## Description

### Field of the invention

The present invention relates to aerated compositions comprising an emulsified fat phase wherein at least 50% of the fat is liquid at 5°C. In particular, the invention relates to compositions which contain hydrophobin.

### Background to the invention

In aerated products such as ice cream, whipped cream, mousse, toppings and aerated cake fillings, the air bubbles are at least in part stabilized by emulsified fat. Conventionally, the fat is substantially solid at the processing and storage temperatures, since liquid fat destabilizes foams. For example ice cream mixes in which greater than about 50% of the fat is liquid at the processing temperature cannot be aerated to a high quality ice cream by conventional routes. Similarly, cream in which the fat is liquid cannot be whipped; this is why cookery books say that you should chill cream before whipping it. Furthermore, to the extent that such products can be aerated, the foams have poor stability.
Solid fats contain a high proportion of saturated fatty acids, for example dairy fat (60-65%) or coconut oil (90%). Health-conscious consumers are now looking for products which have all the properties of the traditional products but which are healthier. One way of achieving this would be to replace the saturated fats with unsaturated fats. However, unsaturated fats contain a substantial proportion of liquid fat at typical processing and / or storage temperatures. Thus it is not possible simply to replace the saturated fats with unsaturated fats.
There have been previous attempts to produce aerated emulsions, such as whipped cream and ice cream, using fats with higher liquid contents. WO 94 / 017672 discloses whippable, water-continuous fat emulsions comprising 10-40 wt % of a fat mixture obtained by blending two fats, such as sunflower oil and palm mid-fraction. A certain amount of solid fat was still found necessary. EP-A 1 212 947 discloses ice creams comprising a fat phase and having overrun of at least 90%, characterised in that at least 50 w/w % of the fat phase is liquid at -5°C. A particular apparatus, in the form of an aeration means that displaces less than 40% of the internal volume of the freezer barrel, was required. Thus there remains a need to provide emulsions containing high levels of liquid fats which aerate well using conventional equipment and which have good foam stability.

### Tests and definitions

#### Aeration and overrun

The term "aerated" means that gas has been intentionally incorporated into the composition, for example by mechanical means. The term "aeratable" means that gas can be incorporated into the composition, for example by whipping. The gas can be any gas, but is preferably, particularly in the context of food products, a food-grade gas such as air, nitrogen, nitrous oxide, or carbon dioxide.
The extent of aeration is defined in terms of "overrun". In the context of the present invention, %overrun is defined in volume terms as:

$$((volume\ of\ aerated\ product - volume\ of\ mix)\ /\ volume\ of\ mix)\ x\ 100$$

where the volumes are the volumes of a fixed mass of product / mix respectively.

#### Liquid fat content

The amount of liquid fat (or oil) means the percentage of the fat in liquid form at 5°C as measured by pulse NMR spectroscopy as follows. The fat or fat blend is first heated to 80°C and then held at 60°C for 30 minutes, so that the fat is completely melted. It is then cooled to and held at 0°C for one hour. It is then warmed to 5°C (the measurement temperature) and held for 30 minutes. The amount of solid fat is then measured with a standard pulse NMR technique using a NMS 120 Minispec NMR spectrometer. The amount of liquid fat is given by (100% - amount of solid fat).

### Brief description of the invention

In our co-pending application EP 1623631, we have found that a fungal protein termed hydrophobin stabilises the air phase in aerated frozen confections. Hydrophobin is surface active and acts as an aerating agent, while also appearing to confer a highly viscoelastic nature to the surface of the air bubbles.

We have now found that that hydrophobin can stabilise aerated emulsions containing high levels of liquid fats. Accordingly, in a first aspect the present invention provides an aerated composition having an overrun of at least 10% and comprising water and an emulsified fat phase wherein at least 50% of the fat is liquid at 5°C, characterized in that the composition comprises hydrophobin.

Preferably the composition comprises at least 0.001 wt% hydrophobin.

Preferably the hydrophobin is in isolated form.

Preferably the hydrophobin is a class II hydrophobin.

Preferably the total fat content is from 1 to 50% by weight of the composition. In a preferred embodiment the fat phase comprises from 2 to 15% by weight of the composition. In another preferred embodiment, the fat phase comprises from 15 to 40% by weight of the composition

Preferably the aerated composition has an overrun of from 25% to 400%.

Preferably the aerated composition is an aerated food product, more preferably a frozen aerated confection, most preferably an ice cream.

Preferably the fat is selected from the group consisting of sunflower oil, olive oil, soybean oil, rapeseed oil and mixtures or fractions thereof.

Preferably, the composition further comprises a yield stress agent. Preferably the yield stress agent is a polysaccharide, more preferably a bacterial polysaccharide, such as xanthan and/or gellan.

In a second aspect, the present invention provides an aeratable composition comprising water and an emulsified fat phase wherein at least 50% of the fat is liquid at 5°C, characterized in that the composition comprises hydrophobin.

Preferably the composition comprises at least 0.001 wt% hydrophobin.

Preferably the hydrophobin is in isolated form.

Preferably the hydrophobin is a class II hydrophobin.

Preferably the total fat content is from 1 to 50% by weight of the composition.

Preferably the fat is selected from the group consisting of sunflower oil, olive oil, soybean oil, rapeseed oil and mixtures or fractions thereof.

### Detailed description of the invention

Unless defined otherwise, all technical and scientific terms used herein have the same meaning as commonly understood by one of ordinary skill in the art (e.g. in frozen confectionery manufacture, chemistry and biotechnology). Definitions and descriptions of various terms and techniques used in frozen confectionery manufacture are found in , "Ice Cream", 6th Edition R.T. Marshall, H.D. Goff and R.W. Hartel, Kluwer Academic / Plenum Publishers, New York 2003. Standard techniques used for molecular and biochemical methods can be found in Sambrook et al., Molecular Cloning: A Laboratory Manual, 3rd ed. (2001) Cold Spring Harbor Laboratory Press, Cold Spring Harbor, N.Y. and Ausubel et al., Short Protocols in Molecular Biology (1999) 4th Ed, John Wiley & Sons, Inc. - and the full version entitled Current Protocols in Molecular Biology.

All percentages, unless otherwise stated, refer to the percentage by weight, with the exception of percentages cited in relation to the overrun.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \quad \text{(SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \text{ (SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/4188 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade -'generally regarded as safe' (GRAS).

Suitable fungal species include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The amount of hydrophobin present in the composition will generally vary depending on the composition formulation and volume of the air phase. Typically, the composition will contain at least 0.001 wt%, hydrophobin, more preferably at least 0.005 or 0.01 wt%. Typically the composition will contain less than 1 wt% hydrophobin. The hydrophobin can be from a single source or a plurality of sources e.g. the hydrophobin can be a mixture of two or more different hydrophobin polypeptides.

The hydrophobin is added in a form and in an amount such that it is available to stabilise the air phase. By the term "added", we mean that the hydrophobin is deliberately introduced into the composition for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the composition in a form such that it is capable of self-assembly at an air-liquid surface.

Typically, the hydrophobin is added to the compositions of the invention in an isolated form, typically at least partially purified, such as at least 10% pure, based on weight of solids. By "added in isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

In one embodiment, the hydrophobin is added to the composition in monomeric, dimeric and/or oligomeric (i.e. consisting of 10 monomeric units or fewer) form. Preferably at least 50 wt% of the added hydrophobin is in at least one of these forms, more preferably at least 75, 80, 85 or 90 wt%. Once added, the hydrophobin will typically undergo assembly at the air/liquid interface and therefore the amount of monomer, dimer and oligomer would be expected to decrease.

Aerated Compositions

Aerated compositions within the scope of this invention comprise water and an emulsified fat phase. Such compositions include aerated food products which are normally stored and served at ambient or chill temperatures, such as whipped cream or non-dairy cream (including cream in which some or all of the dairy fat is replaced with vegetable fat), mousse / aerated desserts, custard, chocolate sauce, yoghurt, cake filling, salad dressing, mayonnaise, soft cheese and the like, provided that they are aerated. Aerated compositions also include frozen aerated confections such as ice cream, sherbet, sorbet and frozen yoghurt.

Preferably the aerated composition is a food product, more preferably a confectionery product. In one particularly preferred embodiment the composition is a frozen aerated confection. In another embodiment, the composition is a mousse, whipped cream or non-dairy cream.

Aeratable Compositions

Aeratable compositions within the scope of this invention comprise water and an emulsified fat phase. Such compositions, which include premixes for aerated desserts, mousses and frozen confections, and whipping cream or non-dairy cream, are subsequently aerated to form the final product.

Fat phase

At least 50% of the fat is liquid at 5°C, preferably at least 60, 70 or 80%. More preferably at least 90% of the fat phase is liquid at 5°C. Most preferably the fat phase is completely liquid at 5°C.

Preferably the fat comprises at least 80% more preferably at least 90%, and even more preferably at least 95% by weight of a fat selected from the group consisting of sunflower oil, safflower oil, olive oil, linseed oil, soybean oil, rapeseed oil, walnut oil, corn oil, grape seed oil, sesame oil, wheat germ oil, cottonseed oil, ground nut oil, fish oil, almond oil, perilla oil, water melon seed oil, rice oil, peanut oil, pistachio oil, hazelnut oil, maize oil and mixtures or fractions thereof. More preferably the fat is selected from the group consisting of sunflower oil, olive oil, soybean oil, rapeseed oil and mixtures or fractions thereof. Particularly preferred is sunflower oil owing to its clean flavour, high poly-unsaturated fat content and wide availability.

The amount of fat in the composition is dependent upon the type of aerated product being made, and may range from 1 to 50%. In the case of frozen aerated confections, the amount of fat is preferably at least 2% by weight of the composition, more preferably at least 4%, most preferably at least 6%. Preferably the amount of fat is at most 15% by weight of the composition, more preferably at most 12%, most preferably at most 10%.

In the case of whipped cream or non-dairy cream and related products, the amount of fat is preferably at least 15% by weight of the composition, more preferably at least 25%, most preferably at least 30%. Preferably the amount of fat is at most 45% by weight of the composition, more preferably at most 40%.

Emulsifiers

The fat phase is emulsified, i.e. present as an oil-in-water emulsion of discrete droplets that are stabilised by the adsorption of an emulsifier to the oil / water interface. Emulsifiers within the context of this invention include:

- Dairy proteins such as skim milk powder, whey protein, hydrolysed whey protein, and pure dairy protein fractions such as caseins, β-lactoglobulin and α-lactalbumin.
- Non-dairy proteins such as gelatine, hydrophobins, and proteins derived from plant materials or seeds, e.g. soy protein.
- Egg yolk
- Food grade non-protein emulsifiers such as Tweens, mono-/di- glycerides of fatty acids, acetic acid esters of monoglycerides, lactic acid esters of monoglycerides, and similar derivatives.
- Polysaccharides that exhibit emulsification capability such as pectin and chemically modified polysaccharides such as polyglycerol alginates.

Overrun

The amount of overrun present in the composition will vary depending on the desired product characteristics. The overrun is at least 10%, preferably at least 25 or 50%. Preferably the amount of overrun is less than 400%, more preferably less than 300 or 200%. For frozen aerated confections, the overrun is most preferably from 70 to 150%. For whipped cream or non-dairy cream and related products, the overrun is most preferably from 100 to 160%.

Yield stress agents

Creaming (which is due to the buoyancy of gas bubbles) can lead to vertical phase separation in foams resulting in a large proportion of bubbles close to the upper surface and the depletion of bubbles at the bottom. Creaming is reduced when the continuous phase of the foam has certain rheological properties, such as an apparent yield stress. Accordingly, in one embodiment, the composition further comprises a yield stress agent or agents which impart suitable rheological properties to the continuous phase, thus inhibiting creaming of the air bubbles. We here define yield stress agents as an ingredient or ingredients (molecular or particulate) that provide an apparent yield stress to the continuous phase.

Suitable ingredients that can be used as the yield stress agents, particularly in food systems, include gelling agents, some non-limiting examples of which are summarised below:

- Thermoreversible gelling biopolymers such as gelatine, iota- and kappa-carrageenan, and agar.
- Chemically set gelling biopolymers which derive their gel structure from an interaction between the polysaccharide and an appropriate ion such as $Ca^{2+}$. Examples include sodium alginate and pectin.
- Bacterial polysaccharides such as xanthan or gellan that can form weak gel-like behaviour which is disrupted by shear. Preferably such polysaccharides are added to give a final amount of at least 0.2 wt% in the aerated mix. If the aerated mix is stored for a long time before freezing, such as a day or more, higher amounts, preferably at least 0.4 wt%, are added.
- Fungal polysaccharides such as schizophyllan.
- Synergistic gels that comprise two or more biopolymers that may be individually non-gelling, but on mixing will form a gel or a gel of a higher modulus. Examples include: sodium alginate with pectin, xanthan with locust bean gum, agar with locust bean gum, and kappa carrageenan with locust bean gum.

A number of the yield stress agents described above are used conventionally to gel products such that they are set. Gelling polysaccharides are not the only ingredients that can be used as yield stress agents in the context of this invention. Any ingredient (molecular or particle) that results in an apparent yield stress of the continuous phase can be used. Other examples of yield stress agents include:

- Lipogels. These include, but are not limited to, polyglycerol esters of saturated fatty acids, and blends of monoglycerides of fatty acids with citric acid esters of saturated fatty acids, lactic acid esters of saturated fatty acids, or diacetyl tartaric acid esters of saturated fatty acids. Typically, the amount of lipogel ingredient would be less than about 2-5 wt% in the pre-aerated mix. Examples of how to produce lipogels can be found in Heertje et al., Food Science and Technology, 1998, 31, 387-396.

- Gelling proteins (thermally or chemically), e.g. whey protein.
- Oil in water emulsions where the dispersed oil particles interact with one another such as to provide the continuous phase with a gelled nature.
- Fibres e.g. of fruit or vegetable origin, modified cellulose etc.

Other ingredients

Aerated and aeratable compositions within the scope of this invention may additionally contain other ingredients such as one or more of the following: other proteins such as dairy proteins or soy protein; sugars e.g. sucrose, fructose, dextrose, lactose, corn syrups, sugar alcohols; salts; colours and flavours; fruit or vegetable purees, extracts, pieces or juice; stabilisers or thickeners, such as polysaccharides, e.g. locust bean gum, guar gum, carrageenan, microcrystalline cellulose; and inclusions such as chocolate, caramel, fudge, biscuit or nuts.

Examples

The present invention will now be described further with reference to the following examples which are illustrative only and non-limiting, and the following figures, wherein:

Figure 1 shows SEM images of example 2 (a) before and (b) after storage at - 10°C.
Figure 2 shows SEM images of comparative example B (a) before and (b) after storage at -10°C.
Figure 3 shows photographs of examples 3, 4 and comparative example C after storage for 3 days.
Figure 4 shows photographs of (a) example 5 and (b) comparative example D after 2 weeks storage.

Example 1 and comparative example A

Example 1, an aerated confection according to the invention, was prepared using the formulation shown in Table 1. A comparative example of an aerated confection not containing hydrophobin was also prepared.

Table 1: Formulations

| Ingredient (wt%) | Example 1 | Comparative Example A |
|---|---|---|
| Skim Milk Powder (SMP) | 10 | 10 |
| Hydrophobin HFBII | 0.1 | 0 |
| Sunflower oil | 10 | 10 |
| Sucrose | 20 | 20 |
| Water | 59.9 | 60.0 |

Skim milk powder contained 33-36% protein, 0.8% fat, 3.7% moisture and was obtained from United Milk, UK. Hydrophobin HFBII was obtained from VTT Biotechnology, Finland. It had been purified from *Trichoderma reesei* essentially as described in WO00/58342 and Linder et al., 2001, Biomacromolecules 2: 511-517.
Sucrose was obtained from Tate and Lyle. Sunflower oil was obtained from Leon Frenkel Ltd, UK. It had a liquid fat content of 100% at 5°C.

*Mix preparation*

Mixes were made in 50 g batches (about 45 ml). The dry ingredients, i.e. sucrose and SMP were blended and added slowly with stirring into water, heated to approximately 30°C, and stirred for 15 minutes. Then the sunflower oil was added and the mix was stirred for a further 15 minutes. The mix was next coarsely emulsified using a Silverson mixer (5 minute emulsification time) and then sonicated using a Branson Digital Sonifier (6 mm tip 10% amplitude, 5 minute sonication time). The required concentration of HFB II (where present) was added as an aliquot, and the mix briefly stirred and then gently sonicated in a sonic bath for 30 seconds to fully disperse the HFB II. The mixes were stored at 5°C until subsequent aeration.

*Aeration*

The mixes were aerated to approximately 100% overrun using a hand-held electric whisk (Aerolatte Ltd, Radlett, UK), for 5 minutes. Although the overruns achieved were similar, it was noticed that during aeration the mix containing hydrophobin appeared to incorporate air more efficiently.

*Measurement of Foam Stability*

The stability of the foams was measured by following the change in volume as a function of time during storage at 5°C. This was determined as follows:

The aerated mixes were poured into 100 ml measuring cylinders. First the total volume of liquid and foam was recorded ($V_{total}$) The total volume was given by the maximum height that the foam reaches in the measuring cylinder. Then the volume of the liquid at the bottom of the foam (which separates due to creaming of the air bubbles) was recorded ($V_{liquid}$). The liquid volume was given by the height of the separated liquid phase at the bottom of the measuring cylinder. This was taken as the point where the foam can be visually observed to be separated from the liquid phase which is substantially free of air bubbles. The foam volume ($V_{foam}$) was then calculated as $V_{total} - V_{liquid}$. The foam volume is zero when $V_{total} = V_{liquid}$, i.e. if only liquid continuous phase remains.

*Results*

The measurements of the stability of the foams are shown in Table 2.

Table 2: Measurements of foam volumes (ml)

| Time | Example 1 | | | Comparative Example A | | |
|---|---|---|---|---|---|---|
| | $V_{total}$ | $V_{liquid}$ | $V_{foam}$ | $V_{total}$ | $V_{liquid}$ | $V_{foam}$ |
| 0 | 80 | 0 | 80 | 80 | 0 | 80 |
| 4 hr | 78 | 36 | 42 | 36 | 36 | 0 |
| 24 hr | 78 | 36 | 42 | 36 | 36 | 0 |
| 4 days | 75 | 36 | 39 | 36 | 36 | 0 |

The foam volume was initially 80 ml for both example 1 and comparative example A. This corresponds to approximately 100% overrun, calculated on the basis of 40 ml of unaerated mix (slightly less than the initial 45 ml since some liquid is lost in pouring from the beaker in which the mix is aerated to the measuring cylinder). The liquid volume was initially 0 ml since creaming had not yet occurred.

For Example 1, containing hydrophobin, the total volume changed very little over a period of 4 days. The foam volume decreased from 80 ml to 39 ml and the liquid volume increased to 36 ml. This is a result of separation of the foam phase from the most of the liquid phase (i.e. creaming) due to the air being less dense than the continuous liquid phase. However, the total volume remained nearly constant, showing that there was very little loss of air from the foam, i.e. the foam remained even after 4 days storage at 5°C.

For comparative example A, the total volume was initially the same as example 1. However after 4 hours, the foam volume decreased to 0, i.e. the foam completely collapsed and only the continuous phase liquid remained. Thus the foam in the comparative example was far less stable.

It is therefore apparent that in the presence of an emulsified liquid fat, the foam containing hydrophobin was significantly more stable than the foam stabilised by milk protein alone.

Example 2 and comparative example B

Example 2, a frozen aerated confection according to the invention, was prepared using the formulation shown in Table 3. Comparative example B, a frozen aerated confection not containing hydrophobin was also prepared.

Table 3: Formulations

| Ingredient (wt%) | Example 2 | Comparative Example B |
|---|---|---|
| Skim Milk Powder (SMP) | 5 | 5 |

(continued)

| Ingredient (wt%) | Example 2 | Comparative Example B |
|---|---|---|
| Hydrophobin HFBII | 0.1 | 0 |
| Sunflower oil | 5 | 5 |
| Sucrose | 15 | 15 |
| Xanthan gum | 0.2 | 0.2 |
| Water | 74.7 | 74.8 |
| Xanthan gum (Keltrol RD) was obtained from CP Kelco. | | |

*Mix preparation*

A mix of all the ingredients except for hydrophobin, was prepared as follows. The dry ingredients, i.e. sucrose, xanthan and SMP were blended and added slowly with stirring into water at ambient temperature. The mixture was heated to 55-60°C with continuous stirring to disperse the ingredients, and the sunflower oil was then added. The mix was then homogenised in an IKA Ultraturrax T18 basic mixer for 5 minutes at speed setting 6 (24,000 rpm) and then sonicated using a Branson Digisonifier for 3 minutes at 75% amplitude (6 mm tip). The mix was then cooled to 5°C and stored at the same temperature.

*Aeration*

The mix was split into 2 parts. The first part (comparative example B) was aerated to 70% overrun using an Aerolatte aerating mixer. Example 2 was aerated as follows. Firstly, 21 g of a 0.45 wt% solution of hydrophobin was aerated to a volume of about 120 ml using an Aerolatte aerating mixer. Then 79 g (the second part) of the mix was added with gentle stirring to aerated HFB solution. The resulting blended foam had an overrun of 60%. The aerated mixes were then poured into 30ml volume plastic tubs and quiescently frozen on solid carbon dioxide (cardice). After 30 minutes, the products were placed in a -80°C freezer.

Samples of the frozen aerated products of example 2 and comparative example B were stored in a -10°C freezer for 10 days. They were then removed and stored at -80°C before further analysis. The microstructure of each sample was visualised using low temperature Scanning Electron Microscopy (SEM). To prepare specimens for microscopy, the sample was cooled to -80 °C on dry ice and a section was cut. This section, approximately 5mm x 5mm x 10mm in size, was mounted on a sample holder using a Tissue Tek: OCT™ compound (PVA 11%, Carbowax 5% and 85% non-reactive components). The sample including the holder was plunged into liquid nitrogen slush and transferred to a low temperature preparation chamber (Oxford Instrument CT1500HF) held under vacuum, approximately $10^{-4}$ bar. The sample was warmed up to -90°C for approximately 60 to 90 seconds so that ice slowly sublimed to reveal surface details. It was then cooled to -110°C to end the sublimation. The sample was next coated with gold using argon plasma. This process also took place under vacuum with an applied pressure of $10^{-1}$ millibars and current of 6 milliamps for 45 seconds. The sample was then transferred to a conventional Scanning Electron Microscope (JSM 5600), fitted with an Oxford Instruments cold stage at a temperature of -160°C. The sample was imaged and areas of interest were captured via digital image acquisition software.

*Results*

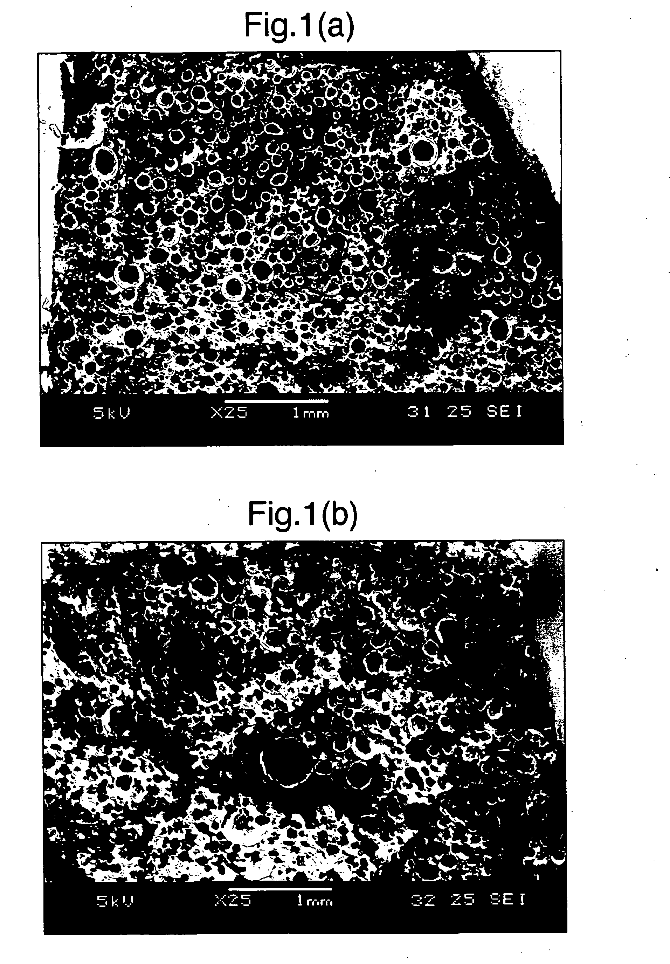

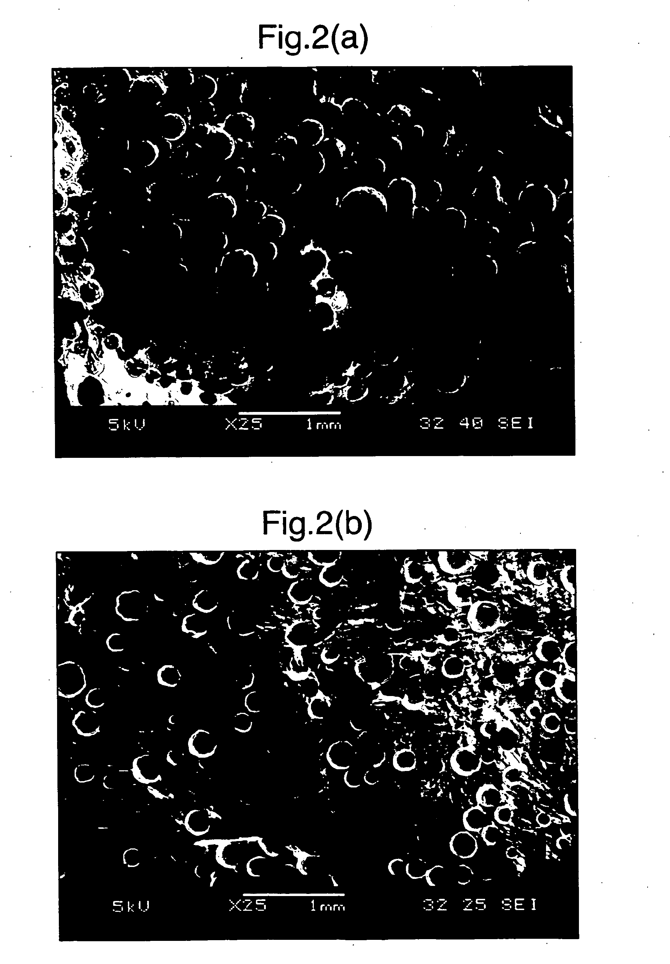

Figures 1 and 2 are SEM images of Example 2 and comparative example B respectively (a) before and (b) after storage at -10°C. Comparison of Figure 1(a) with Figure 2(a) shows that the air bubbles are initially smaller in Example 2 containing hydrophobin. Moreover, Figure 1 shows that in the presence of hydrophobin, the air phase remains substantially the same after storage both in terms of bubble size and air phase volume. In contrast, Figure 2 shows that comparative example B contains significantly fewer air bubbles after storage, indicating that in the absence of hydrophobin, the air phase volume has decreased during storage (this is likely to be largely due to disproportionation).

Examples 3, 4 and comparative example C

Examples 3 and 4, which are whipped cream-type products according to the invention were prepared using the formulations shown in Table 4. They contain sunflower oil in amounts typical of those in commercially available whipping creams and non-dairy creams Comparative example C, a similar product not containing hydrophobin was also prepared.

Table 4: Formulations

| Ingredient (wt%) | Example 3 | Example 4 | Comparative Example C |
|---|---|---|---|
| Skim Milk Powder (SMP) | 5 | 5 | 5 |
| Hydrophobin HFBII | 0.1 | 0.1 | 0 |
| Sunflower oil | 20 | 40 | 20 |
| Xanthan gum | 0.1 | 0.1 | 0.1 |
| Water | 74.8 | 54.8 | 74.9 |

*Mix preparation*

Mixes were prepared as follows. The xanthan and SMP were blended and added slowly with stirring into water at ambient temperature. The mixture, was heated to 55-60°C with continuous stirring to disperse the ingredients, and the sunflower oil was then added. The mix was then homogenised in an IKA Ultraturrax T18 basic mixer for 5 minutes at speed setting 6 (24,000 rpm) and then sonicated using a Branson Digisonifier for 3 minutes at 75% amplitude (6 mm tip). The mix was then cooled to and stored at 5°C.

*Aeration*

Examples 3 and 4 were aerated as follows. Firstly, 21 g of a 0.45 wt% solution of hydrophobin was aerated to a volume of about 120 ml using an Aerolatte aerating mixer. Then 79 g of the mix prepared as described above was added with gentle stirring to the aerated HFB solution. The resulting blended foams had overruns of about 150% (Example 3) and 130% (Example 4). Comparative example C was aerated to approximately 100% overrun using an Aerolatte aerating mixer. 50 ml of each foam was poured into a cylindrical glass measuring cylinder and stored at 5°C.

*Results*

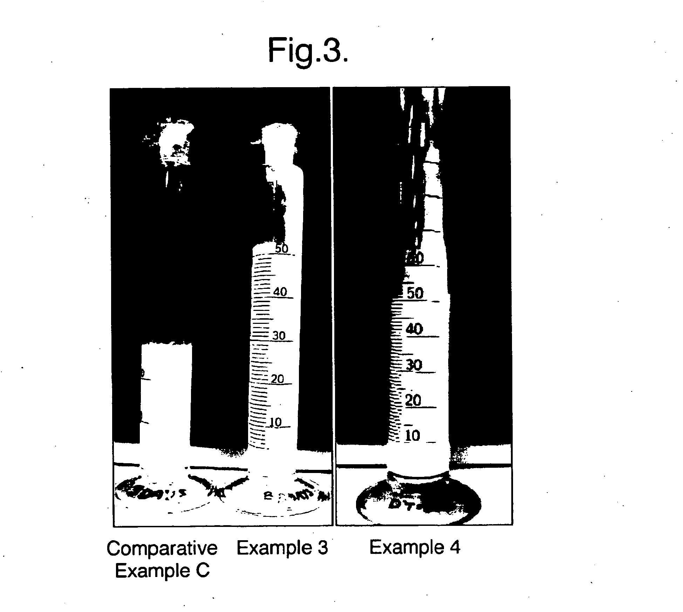

The stability of the foams was measured by observing the total foam volume as a function of time in the measuring cylinders. Initially, all three foams filled the measuring cylinder to 50 ml. Figure 3 shows photographs of the foams after storage for 3 days. The foam of comparative example C completely collapsed and only the un-aerated liquid remained. In contrast, the foams of examples 3 and 4 containing hydrophobin were very stable and no visible foam collapse occurred. With example 4, there was some creaming of the foam and emulsified oil phase, but the total volume of the foam remained the same, i.e. there was no loss of air phase. These results show that the stability of foams containing liquid oil is much greater when hydrophobin is added.

Example 5 and comparative example D

Example 5, an aerated mayonnaise according to the invention was prepared using the formulation shown in Table 5. Comparative example D, a similar product using Hygel as the foam stabiliser instead of hydrophobin was also prepared.

Table 5: Formulations

| Ingredient (wt%) | Example 5 | Comparative Example D |
|---|---|---|
| Mayonnaise | 75 | 75 |
| Hydrophobin HFBII | 0.2 | |
| Hygel | | 0.2 |
| Water | 24.8 | 24.8 |

The mayonnaise (Hellman's Real Mayonnaise, Unilever UK) contained 77% vegetable oil, water, egg yolk (8%), spirit vinegar, salt, sugar, lemon juice, mustard, flavour, antioxidants, and paprika extract. Hygel is a hydrolysed milk protein aerating agent, obtained from Kerry Bio-science, UK

*Mix preparation and aeration*

The hydrophobin or hygel was dissolved in 12.4 ml of water and aerated to approximately 60 ml volume using an Aerolatte aerating mixer. Sufficient overrun was obtained within about 10 seconds. These foams were then stirred gently into 38g of the mayonnaise to produce an aerated mayonnaise with approximately 100% overrun. The products were then stored at 5°C.

*Results*

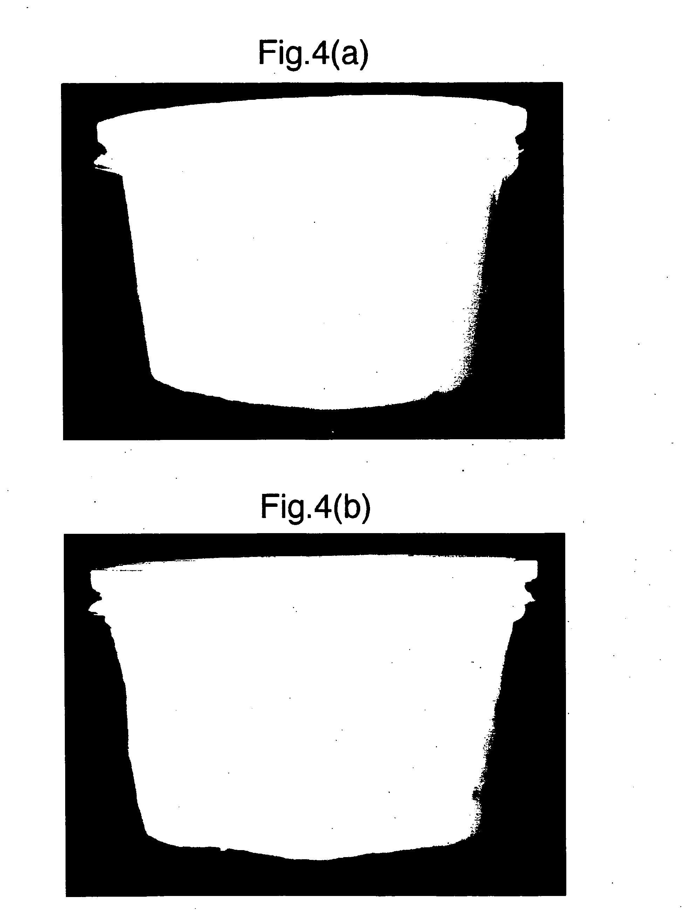

Foams were visually assessed at time=0 and again after storage for two weeks. Figure 4 shows photographs of (a) example 5 and (b) comparative example D after 2 weeks storage. The air bubbles in comparative example D coarsened significantly so that they became visible and there was some separation of the liquid phase. Example 5 was much more stable to storage, and no visible air bubbles were observed. These results show that the aerated mayonnaise containing HFBII was much more stable than that containing the conventional aerating agent.

Example 6

Example 6, an aerated mayonnaise according to the invention was prepared as follows: 20ml of HFBII solution (equating to 0.1% HFBII in the final product) was added to one egg yolk, 15 ml of vinegar and 2g of salt. This was mixed using a balloon whisk on a Breville mixer resulting in an overrun of approximately 20%. 125 ml of olive oil was then added slowly whilst mixing and aeration continued, until the mayonnaise reached an overrun of approximately 100%. This example demonstrates that a mayonnaise containing liquid fat can be aerated when it contains hydrophobin.

In summary, the above examples of various food products containing an emulsified liquid fat show that the products can be aerated when hydrophobin is present, and that the hydrophobin results in a significant improvement in foam stability.

The various features and embodiments of the present invention, referred to in individual sections above apply, as appropriate, to other sections, *mutatis mutandis.* Consequently features specified in one section may be combined with features specified in other sections, as appropriate.

All publications mentioned in the above specification are herein incorporated by reference. Various modifications and variations of the described products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1. An aerated composition having an overrun of at least 10% and comprising water and an emulsified fat phase wherein at least 50% of the fat is liquid at 5°C, **characterized in that** the composition comprises hydrophobin.

2. An aerated composition according to claim 1 wherein the composition comprises at least 0.001 wt% hydrophobin.

3. An aerated composition according to claim 1 or claim 2 wherein the hydrophobin is in isolated form.

4. An aerated composition according to any one of claims 1 to 3 wherein the hydrophobin is a class II hydrophobin.

5. An aerated composition according to any one of the preceding claims wherein the total fat content is from 1 to 50% by weight of the composition.

6. An aerated composition according to claim 5 wherein the total fat content is from 2 to 15% by weight of the composition.

7. An aerated composition according to claim 5 wherein the total fat content is from 15 to 40% by weight of the composition.

8. An aerated composition according to any one of the preceding claims wherein the overrun is from 25% to 400%.

9. An aerated composition according to any one of the preceding claims which is a food product.

10. An aerated composition according to claim 9 which is a frozen aerated confection.

11. An aerated composition according to any one of the preceding claims wherein the fat is selected from the group consisting of sunflower oil, olive oil, soybean oil, rapeseed oil and mixtures or fractions thereof.

12. An aerated composition according to any one of the preceding claims which further comprises a yield stress agent.

13. An aerated composition according to claim 12 wherein the yield stress agent is xanthan and/or gellan.

14. An aeratable composition comprising water and an emulsified fat phase wherein at least 50% of the fat is liquid at 5°C, **characterized in that** the composition comprises hydrophobin.

15. An aeratable composition according to claim 14 wherein the composition comprises at least 0.001 wt% hydrophobin.

16. An aeratable composition according to claim 14 or claim 15 wherein the hydrophobin is in isolated form.

17. An aeratable composition according to any one of claims 14 to 16 wherein the hydrophobin is a class II hydrophobin.

18. An aeratable composition according to any one of claims 14 to 17 wherein the total fat content is from 1 to 50% by weight of the composition.

19. An aeratable composition according to any one of claims 14 to 18 wherein the fat is selected from the group consisting of sunflower oil, olive oil, soybean oil, rapeseed oil and mixtures or fractions thereof.

**Patentansprüche**

1. Belüftete Zusammensetzung, die einen Überlauf von wenigstens 10 % hat und Wasser und eine emulgierte Fettphase umfasst, wobei wenigstens 50 % des Fetts bei 5 °C flüssig sind, **dadurch gekennzeichnet, dass** die Zusammensetzung Hydrophobin umfasst.

2. Belüftete Zusammensetzung nach Anspruch 1, wobei die Zusammensetzung wenigstens 0,001 Gewichts-% Hydrophobin umfasst.

3. Belüftete Zusammensetzung nach Anspruch 1 oder Anspruch 2, wobei das Hydrophobin in isolierter Form ist.

4. Belüftete Zusammensetzung nach einem der Ansprüche 1 bis 3, wobei das Hydrophobin ein Klasse II-Hydrophobin ist.

5. Belüftete Zusammensetzung nach einem der vorangehenden Ansprüche, wobei der Gesamtfettgehalt 1 bis 50 Gewichts-% der Zusammensetzung ist.

6. Belüftete Zusammensetzung nach Anspruch 5, wobei der Gesamtfettgehalt 2 bis 15 Gewichts-% der Zusammensetzung ist.

7. Belüftete Zusammensetzung nach Anspruch 5, wobei der Gesamtfettgehalt 15 bis 40 Gewichts-% der Zusammensetzung ist.

8. Belüftete Zusammensetzung nach einem der vorangehenden Ansprüche, wobei der Überlauf 25 bis 400 % ist.

9. Belüftete Zusammensetzung nach einem der vorangehenden Ansprüche, die ein Nahrungsmittelprodukt ist.

10. Belüftete Zusammensetzung nach Anspruch 9, die ein tiefgekühltes, belüftetes Konfekt ist.

11. Belüftete Zusammensetzung nach einem der vorangehenden Ansprüche, wobei das Fett ausgewählt ist aus der Gruppe, bestehend aus Sonnenblumenöl, Olivenöl, Sojabohnenöl, Rapssamenöl und Gemischen und Fraktionen davon.

**12.** Belüftete Zusammensetzung nach einem der vorangehenden Ansprüche, die außerdem ein Fließspannungsmittel umfasst.

**13.** Belüftete Zusammensetzung nach Anspruch 12, wobei das Fließspannungsmittel Xanthan und/oder Gellan ist.

**14.** Belüftete Zusammensetzung, die Wasser und eine emulgierte Fettphase umfasst, wobei wenigstens 50 % des Fetts bei 5 °C flüssig sind, **dadurch gekennzeichnet, dass** die Zusammensetzung Hydrophobin umfasst.

**15.** Belüftete Zusammensetzung nach Anspruch 14, wobei die Zusammensetzung wenigstens 0,001 Gewichts-% Hydrophobin umfasst.

**16.** Belüftete Zusammensetzung nach Anspruch 14 oder Anspruch 15, wobei das Hydrophobin in isolierter Form ist.

**17.** Belüftete Zusammensetzung nach einem der Ansprüche 14 bis 16, wobei das Hydrophobin Klasse II-Hydrophobin ist.

**18.** Belüftete Zusammensetzung nach einem der Ansprüche 14 bis 17, wobei der Gesamtfettgehalt 1 bis 50 Gewichts-% der Zusammensetzung ist.

**19.** Belüftete Zusammensetzung nach einem der Ansprüche 14 bis 18, wobei das Fett aus der Gruppe, bestehend aus Sonnenblumenöl, Olivenöl, Sojabohnenöl, Rapssamenöl und Gemischen oder Fraktionen davon, ausgewählt ist.

## Revendications

**1.** Composition aérée ayant un foisonnement d'au moins 10 % et comprenant de l'eau et une phase grasse émulsionnée dans laquelle au moins 50 % de la matière grasse est liquide à 5°C, **caractérisée en ce que** la composition comprend de l'hydrophobine.

**2.** Composition aérée selon la revendication 1, dans laquelle la composition comprend au moins 0,001 % en poids d'hydrophobine.

**3.** Composition aérée selon la revendication 1 ou la revendication 2, dans laquelle l'hydrophobine est sous une forme isolée.

**4.** Composition aérée selon l'une quelconque des revendications 1 à 3, dans laquelle l'hydrophobine est une hydrophobine de classe II.

**5.** Composition aérée selon l'une quelconque des revendications précédentes, dans laquelle la teneur totale en matière grasse est de 1 à 50 % en poids de la composition.

**6.** Composition aérée selon la revendication 5, dans laquelle la teneur en matière grasse totale est comprise entre 2 et 15 % en poids de la composition.

**7.** Composition aérée selon la revendication 5, dans laquelle la teneur en matière grasse totale est comprise entre 15 et 40 % en poids de la composition.

**8.** Composition aérée selon l'une quelconque des revendications précédentes dans laquelle le foisonnement est de 25 % à 400 %.

**9.** Composition aérée selon l'une quelconque des revendications précédentes, qui est un produit alimentaire.

**10.** Composition aérée selon la revendication 9, qui est un dessert aéré congelé.

**11.** Composition aérée selon l'une quelconque des revendications précédentes, dans laquelle la matière grasse est choisie dans le groupe constitué d'huile de tournesol, d'huile d'olive, d'huile de soja, d'huile de colza et des mélanges ou fractions correspondants.

**12.** Composition aérée selon l'une quelconque des revendications précédentes, qui comprend en outre un agent ayant une résistance élastique.

13. Composition aérée selon la revendication 12, dans laquelle l'agent à résistance élastique est la gomme xanthane et/ou la gomme gellane.

14. Composition pouvant être aérée comprenant de l'eau et une phase grasse émulsionnée dans laquelle au moins 50 % de la matière grasse est liquide à 5°C, **caractérisée en ce que** la composition comprend de l'hydrophobine.

15. Composition pouvant être aérée selon la revendication 14, dans laquelle la composition comprend au moins 0,001 % en poids d'hydrophobine.

16. Composition pouvant être aérée selon la revendication 14 ou la revendication 15, dans laquelle l'hydrophobine est sous une forme isolée.

17. Composition pouvant être aérée selon l'une quelconque des revendications 14 à 16, dans laquelle l'hydrophobine est une hydrophobine de classe II.

18. Composition pouvant être aérée selon l'une quelconque des revendications 14 à 17, dans laquelle la teneur totale en matière grasse est de 1 à 50 % en poids de la composition.

19. Composition pouvant être aérée selon l'une quelconque des revendications 14 à 18, dans laquelle la matière grasse est choisie dans le groupe constitué d'huile de tournesol, d'huile d'olive, d'huile de soja, d'huile de colza et de mélanges ou fractions correspondantes.

## Fig.1(a)

5kU    X25    1mm    31 25 SEI

## Fig.1(b)

5kU    X25    1mm    32 25 SEI

## Fig.2(a)

## Fig.2(b)

# Fig.3.

Comparative   Example 3     Example 4
Example C

Fig.4(a)

Fig.4(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 94017672 A
- EP 1212947 A
- EP 1623631 A
- WO 0174864 A
- WO 964188 A
- WO 0157076 A
- WO 0058342 A

### Non-patent literature cited in the description

- **R.T. Marshall ; H.D. Goff ; R.W. Hartel.** Ice Cream. Kluwer Academic / Plenum Publishers, 2003
- **Sambrook et al.** Molecular Cloning: A Laboratory Manual. Cold Spring Harbor Laboratory Press, 2001
- **Ausubel et al.** Short Protocols in Molecular Biology. John Wiley & Sons, Inc, 1999
- **Wessels.** *Adv. Microb. Physio.,* 1997, vol. 38, 1-45
- **Wosten.** *Annu Rev. Microbiol.,* 2001, vol. 55, 625-646
- **De Vocht et al.** *Biophys. J.,* 1998, vol. 74, 2059-68
- **Wosten et al.** *Embo. J.,* 1994, vol. 13, 5848-54
- **Talbot.** *Curr. Biol,* 2003, vol. 13, R696-R698
- **MacCabe ; Van Alfen.** *App. Environ. Microbiol,* 1999, vol. 65, 5431-5435
- **Collen et al.** *Biochim Biophys Acta,* 2002, vol. 1569, 139-50
- **Calonje et al.** *Can. J. Microbiol.,* 2002, vol. 48, 1030-4
- **Askolin et al.** *Appl Microbiol Biotechnol.,* 2001, vol. 57, 124-30
- **De Vries et al.** *Eur J Biochem.,* 1999, vol. 262, 377-85
- **Heertje et al.** *Food Science and Technology,* 1998, vol. 31, 387-396
- **Linder et al.** *Biomacromolecules,* 2001, vol. 2, 511-517